# EUROPEAN PATENT SPECIFICATION

(11) **EP 3 539 835 B1**
(45) Date of publication and mention of the grant of the patent: **04.01.2023**
(21) Application number: 17870512.5
(22) Date of filing: 14.11.2017
(51) Int. Cl.: B60T 8/171, B60T 8/32, B60K 16/00, B60G 17/019, G01P 3/44, G01P 15/09, B60T 8/17

(54) **VEHICLE SPEED SENSOR DEVICE AND ABS APPARATUS INCLUDING SAME**
FAHRZEUGGESCHWINDIGKEITSSENSORVORRICHTUNG UND ABS-VORRICHTUNG DAMIT
DISPOSITIF DE CAPTEUR DE VITESSE DE VÉHICULE ET APPAREIL DU TYPE ABS COMPRENANT CELUI-CI

(30) Priority: 14.11.2016 KR 20160150992
(43) Date of publication of application: 18.09.2019
(73) Proprietor: ILJIN GLOBAL Co., Ltd., Gangnam-gu Seoul (KR)
(72) Inventor: KIM, Young Tae, Seoul 06157 (KR)
(74) Representative: RGTH
(86) International application number: PCT/KR2017/012866
(87) International publication number: WO 2018/088870

(56) References cited:
- EP-A2- 1 614 551
- DE-A1-102008 044 902
- DE-A1-102010 030 629
- JP-A- 2012 051 429
- KR-A- 20130 014 215
- KR-A- 20130 049 291
- KR-A- 20140 085 199
- KR-B1- 101 541 997
- US-A1- 2004 075 022
- US-A1- 2010 288 046
- US-A1- 2012 123 646

## Description

### [Technical Field]

The present invention relates to a vehicle speed sensor device, an anti-lock brake system (ABS) apparatus including the same and an operating method thereof. Specifically, the present invention relates to a speed sensor device located on a vehicle wheel and configured to measure a rotational speed of the wheel and an ABS apparatus configured to detect slip of the wheel using the speed information measured from the speed sensor device and control a braking force of the vehicle.

### [Background Art]

Generally, a speed sensor for measuring a speed of a vehicle is provided in each of tires of the vehicle to measure a rotational speed of the tires. The speed sensor is electrically connected to an electronic control unit (ECU) through a wiring to transmit speed information of each of tires to the ECU in real time. Further, the speed sensor receives power from the ECU through the wiring.

Furthermore, the ECU controls a braking force of the vehicle using the speed information from the speed sensor. Particularly, in a situation that a road surface is slippery or sudden braking is performed, the ECU controls the braking force of the vehicle using the speed information received in real time to prevent a lock-up phenomenon that a wheel is stopped by the braking force before the vehicle is stopped and a vehicle body slips. Such a system is called an anti-lock brake system (ABS).

For example, DE 10 2010 030 629 A1 discloses a wheel speed sensor wherein wheel speeds and/or the vehicle velocity are transmitted to a further control device, which carries out one of the following functions with these data: navigation, parking aid, inter-vehicle distance monitoring, fatigue detection, steering or lighting. However, the wheel speed sensor in DE 10 2010 030 629 A1 differs from the vehicle speed sensor device according to the claim 1 of the present invention.

### [Disclosure]

### [Technical Problem]

A conventional speed sensor is electrically connected to an electronic control unit (ECU) via a wired connection (wiring). However, such a wired connection has problems as described below.

A first problem is vulnerability to external damage. In most vehicle designs, wired connection cables connecting a speed sensor to an ECU are located between a vehicle body structure and a wheel bearing at a vehicle floor in a state of being exposed to the outside without a separate housing. Consequently, the wired connection cable is vulnerable to damage due to external factors such as obstacles including stones on a road, irregularities on the road, and the like, and natural aging due to exposure to an external environment. When the wired connection cable is damaged, a supply of power to the speed sensor of the tire may be interrupted or the speed sensor may not be able to smoothly transmit a speed signal to the ECU. Accordingly, an error may occur in an entire operation of an anti-lock brake system (ABS) and safety of a driver may be threatened.

A second problem is possibility of signal crosstalk between wired connection cables. In addition to wired connection cables for the ABS, various cables are used in the vehicle and complicatedly connected to each other. Recently, installation of sensor products increases according to the advancement of the vehicle so that installation of wired connection cables is also increasing. When the signal crosstalk occurs between the wired connection cables, the speed sensor may not be able to smoothly transmit the speed signal to the ECU. Accordingly, an error may occur in the entire operation of the ABS and the safety of the driver may also be threatened.

A third problem is weight of the wired connection cables. In light of the industry reality that weight reduction of the vehicle is required in conjunction with an energy consumption issue, it is necessary to reduce weight of the wired connection cables for connecting the speed sensors provided on the tires to the ECU.

Therefore, the present invention is directed to providing a vehicle speed sensor device, an ABS apparatus including the same, which are capable of solving the above-described problems of a wired connection (i.e., vulnerability to external damage and probability of signal crosstalk) and reducing weight of a vehicle, by connecting the vehicle speed sensor device to an ECU to be communicatable in a wireless manner and transmitting a speed signal through the wireless communication.

### [Technical Solution]

According to the present invention, a vehicle speed sensor device is provided. The vehicle speed sensor device according to the present invention comprises a rechargeable battery; a speed sensor configured to receive power from the battery measure a rotational speed of a wheel bearing to generate a speed signal; and a wireless signal transmitter configured to transmit the speed signal to an electronic controller through wireless communication.

According to one embodiment of the present invention, a transmission period of the speed signal may be 50 µs or less.

According to the present invention, the vehicle speed sensor device further comprises a self-generator configured to be able to generate power from rotation of the wheel bearing and charge the battery using the generated power, and
an external power supply module configured to supply the power to the battery, wherein the external power supply module comprises a capacitor capable of storing the power generated by the self-generator and the capacitor is configured to charge the battery when an output current of the self-generator is less than or equal to a predetermined value.

According to the present invention, the external power supply module further comprises a first wireless power transceiver connected to the capacitor and configured to transmit the power of the capacitor in a wireless manner, and the vehicle speed sensor device further comprises a second wireless power transceiver configured to receive the power from the first wireless power transceiver provided in the external power supply module in a wireless manner and charge the battery using the received power.

According to one embodiment of the present invention, the self-generator may be configured to charge the battery using the generated power when a charging level of the battery is less than or equal to a predetermined level and charge the capacitor using the generated power when the charging level of the battery exceeds the predetermined level.

According to one embodiment of the present invention, the external power supply module may comprise one or more energy harvesting parts configured to convert an ambient energy source into power and store the converted power in the capacitor.

According to one embodiment of the present invention, the energy harvesting part may comprise a piezoelectric element installed at a suspension and configured to generate power from a displacement of the suspension.

According to one embodiment of the present invention, the energy harvesting parts may comprise a photovoltaic element installed on an outer surface of the vehicle and configured to generate power from sunlight.

According to one embodiment of the present invention, an anti-lock brake system (ABS) apparatus may be provided. The ABS apparatus according to one embodiment of the present invention may comprise the above-described vehicle speed sensor device and the electronic controller, wherein the electronic controller may recognize whether slip of a vehicle occurs using the speed signal transmitted from the wireless signal transmitter of the vehicle speed sensor device through wireless communication and control a braking force of the vehicle based on whether the slip occurs.

### [Advantageous Effects]

In a vehicle speed sensor device according to one embodiment of the present invention, wireless communication is employed for transmitting a speed signal to an electronic controller such that vulnerability to external damage and signal crosstalk due to a complicated cable connection, which are problems of a conventional wired connection, can be solved and a weight of a vehicle can be reduced.

Further, power can be stably supplied to the vehicle speed sensor device not only which is important for vehicle safety but also which requires high power, and power can be optionally stored for driving any other electronic component in the vehicle.

Furthermore, the vehicle speed sensor device according to one embodiment of the present invention can utilize extra energy, which is not effectively used in each of parts of the vehicle, as electric power.

### [Description of Drawings]

FIG. 1 is a schematic diagram of an anti-lock brake system (ABS) apparatus according to one embodiment of the present invention.
FIG. 2 is a block diagram of the ABS apparatus according to one embodiment of the present invention.
FIG. 3 is a perspective view illustrating a position of each component of a vehicle speed sensor device according to one embodiment of the present invention in a vehicle wheel.
FIG. 4 is a schematic diagram of a suspension comprising energy harvesting parts with a piezoelectric element according to one embodiment of the present invention.
FIG. 5A is a flowchart illustrating an operating method of a vehicle speed sensor device not covered by the present invention.
FIG. 5B is a flowchart illustrating an operating method of a vehicle speed sensor device not covered by the present invention.
FIG. 6A is a flowchart illustrating an operating method of a vehicle speed sensor device not covered by the present invention.
FIG. 6B is a flowchart illustrating an operating method of a vehicle speed sensor device not covered by the present invention.
FIG. 7 is a flowchart illustrating a charging operation performed by a self-generator not covered by the present invention.
FIG. 8 is a flowchart illustrating an operating method of an ABS apparatus not covered by the present invention.

### [Modes of the Invention]

The scope of the claims according to the present invention is not limited to the embodiments described below or to the detailed descriptions on these embodiments.

Unless otherwise defined, all technical and scientific terms used herein have the same meaning commonly understood by those skilled in the art to which the present invention pertains. All terms used herein are selected for the purpose of more clearly describing the present invention and not limiting the scope of the present invention defined by appended claims.

Unless the phrase or sentence clearly indicates otherwise, terms "comprising," "including," " having," "taking," and the like used herein should be construed as openended terms encompassing the possibility of including other embodiments.

The singular form described herein may include the plural form unless the context clearly dictates otherwise, and this is equally applied to the singular form set forth in the claims.

Terms a "first," a "second," and the like are used to distinguish a plurality of components, and the order or importance of corresponding components is not limited by these terms.

The term a "module" or "part" used herein refers to software or a hardware component such as a field-programmable gate array (FPGA), an application specific integrated circuit (ASIC), or the like. However, the "module" or "part" is not limited to hardware and software. The "module" or "part" may be configured to reside on an addressable storage medium or may be configured to playback one or more processors. Accordingly, for example, the "module" or "part" includes components, such as software components, object oriented software components, class components, and task components, processes, functions, attributes, procedures, subroutines, segments of a program code, drivers, firmwares, microcodes, circuits, data, databases, data structures, tables, arrays, and variables. The components and functions provided in the "module" or "part" may be combined to a smaller number of components and the "module" or "part," or may be further divided into additional components and an additional "module" or "part."

In this disclosure, the expression "based on" or " due to" is used to describe one or more factors affecting an action or an operation of a decision or a determination, which are described in a phrase or sentence in which the expression is contained, and such a expression does not exclude additional factors affecting the action or the operation of the decision or the determination.

Throughout this disclosure, when a component is referred to as being "connected" or "coupled" to another component, the component can be directly connected or coupled to another component or can be indirectly connected or coupled to another component by intervening yet another component therebetween.

Hereinafter, exemplary embodiments of the present invention will be described in detail with reference to the accompanying drawings.

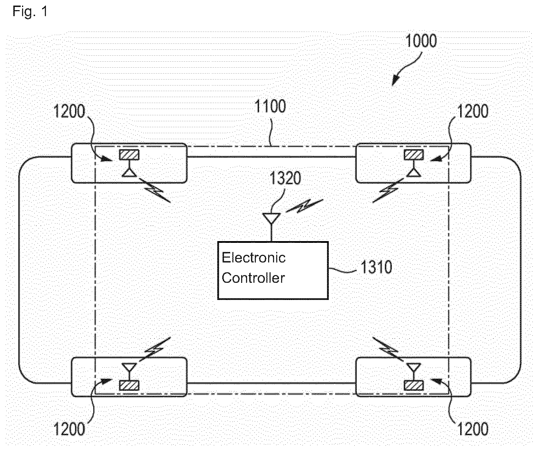

FIG. 1 is a schematic diagram of an anti-lock brake system (ABS) apparatus 1100 installed in a vehicle 1000 according to one embodiment of the present invention. The ABS apparatus 1100 comprises a vehicle speed sensor device 1200, an electronic controller 1310, and a wireless signal receiver 1320. In one embodiment of the present invention, the vehicle speed sensor device 1200 is located on each of wheels. Although the vehicle speed sensor device 1200 has been shown as being provided on all four wheels of the vehicle in FIG. 1, the vehicle speed sensor device 1200 may be provided on only two front or rear wheels of the vehicle 1000 or on only one of the four wheels thereof.

The vehicle speed sensor device 1200 measures the rotational speed of the wheel to generate a speed signal and transmits the generated speed signal to the wireless signal receiver 1320 through wireless communication. The wireless signal receiver 1320 receives the speed signal of each of wheels, and the received speed signal is used to control the vehicle 1000 (e.g., control of a braking force of the vehicle) by the electronic controller 1310.

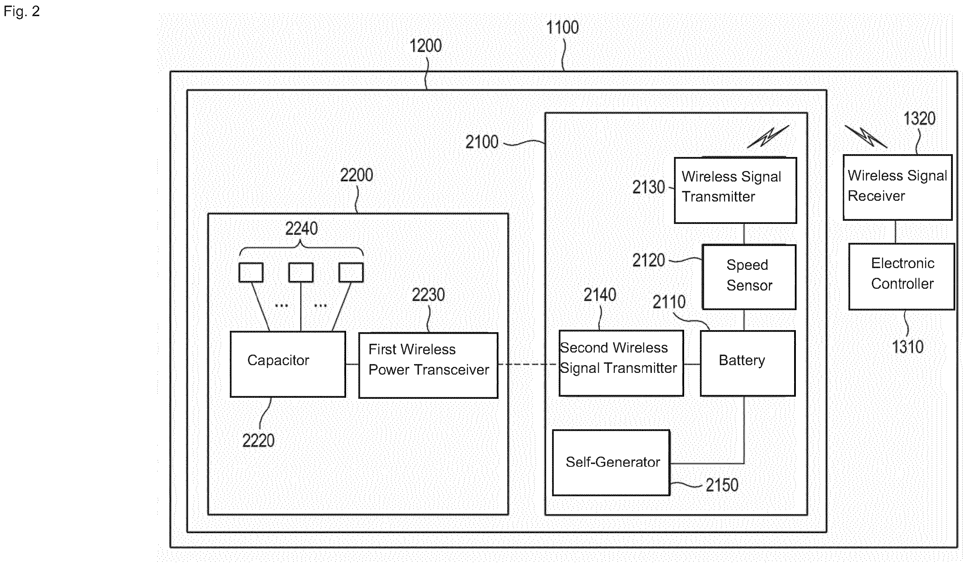

FIG. 2 is a block diagram of the ABS apparatus 1100 according to one embodiment of the present invention. According to one embodiment of the present invention, the vehicle speed sensor device 1200 comprises a sensing module 2100 and an external power supply module 2200. The sensing module 2100 may comprise a battery 2110, a speed sensor 2120, a wireless signal transmitter 2130, a second wireless power transceiver 2140, and a self-generator 2150. The external power supply module 2200 may comprise a capacitor 2220, a first wireless power transceiver 2230, and an energy harvesting part 2240. Further, the vehicle speed sensor device 1200 may communicate with the wireless signal receiver 1320 in the vehicle 1000 through the wireless signal transmitter 2130, and a signal received by the wireless signal receiver 1320 may be transmitted to the electronic controller 1310 so as to control the vehicle 1000.

The battery 2110 is a component for supplying power to a speed sensor 2120 and may be a rechargeable battery (e.g., a lithium ion battery). The speed sensor 2120 is configured to measure a rotational speed of a wheel bearing and generate a speed signal based on the measured rotational speed. For example, the speed sensor 2120 may comprise a Hall integrated circuit (IC) having a Hall element or the like. The Hall element may be made of InSb, GaAs, or the like. The wireless signal transmitter 2130 is configured to transmit the speed signal generated by the speed sensor 2120 to the electronic controller 1310 through wireless communication. According to one embodiment of the present invention, the speed signal is transmitted to the electronic controller 1310 via the wireless signal receiver 1320.

A transmission period for transmitting the speed signal to the electronic controller 1310 via wireless communication may be designed differently as necessary. However, since rotational speed information of the wheel is important for controlling the vehicle, particularly, for controlling the ABS apparatus 1100 directly connected to safety of a driver, the transmission period is usually short. For example, as compared with a case in which a different kind of vehicle information signal is transmitted, such as a case in which an air pressure in a wheel is monitored and air pressure information is provided (a tire pressure sensor), a transmission period of a signal may be relatively shorter. Ideally, a signal may be transmitted in real time. Alternatively, a transmission period of a speed signal may be designed to be 50 µs or less, more preferably, 10 µs or less in practical applications.

Power consumption of the speed sensor 2120 is relatively larger than that of other sensors (e.g., the tire pressure sensor) since a period for which a speed signal is sensed and then transmitted to the electronic controller 1310 is required to be shorter in order for a proper operation of the ABS apparatus 1100. Further, it is an important requirement to stably supply power to the speed sensor 2120 since an operation of the speed sensor 2120 is directly connected to stable control of the vehicle and further to the safety of the driver, as described above.

According to one embodiment of the present invention, the vehicle speed sensor device 1200 is not electrically connected to the electronic controller 1310 through a wired connection (wiring). The vehicle speed sensor device 1200 communicates with the electronic controller 1310 in a wireless manner and comprises a component for stably supplying power to the speed sensor 2120 therein. This will be described in more detail below.

The sensing module 2100 comprises the battery 2110 connected to the speed sensor 2120, and the battery 2110 is a rechargeable battery. When a charging level of the battery 2110 is low, the battery 2110 is recharged. That is, the battery 2110 is maintained at a predetermined charging level or higher, and thus power may be stably supplied to the speed sensor 2120.

The sensing module 2100 may comprise the self-generator 2150 as a component for charging the battery 2110. The self-generator 2150 generates power due to rotation of the wheel bearing and charges the battery 2110 using the generated power. According to one embodiment of the present invention, the self-generator 2150 is wired connected to the battery 2110.

The external power supply module 2200 comprises a capacitor 2220 as a component for storing the power generated by the self-generator 2150. For example, according to one embodiment of the present invention, the capacitor 2220 may be installed on each of wheels and may be wired connected to the self-generator 2150 of a corresponding wheel. Alternatively, the number of capacitors 2220 provided in the vehicle 1000 may be less than the number of wheels, and one or more capacitors 2220 may be configured to be connected to a plurality of self-generators 2150. Further, the capacitor 2220 may be configured to supply power not only to the vehicle speed sensor device 1200 according to the present invention but also to other electronic components of the vehicle 1000.

As shown in FIG. 2, according to one embodiment of the present invention, the capacitor 2220 is configured to charge the battery 2110 when an output current of the self-generator 2150 is less than or equal to a predetermined value. Since the self-generator 2150 generates power due to rotation of the wheel bearing, the self-generator 2150 may not be able to supply sufficient power to the battery 2110 when a rotation speed of the wheel is low. However, if the capacitor 2220 is configured to charge the battery 2110 when the output current of the self-generator 2150 is less than or equal to a predetermined value, power supplied from the capacitor 2220 to the battery 2110 may act to "wake-up" the speed sensor 2120. For example, when the vehicle 1000 is driven after not driven for a long time, a charging level of the battery 2110 may be low. In this case, when the vehicle 1000 is driven at a low speed, an amount of power supplied from the self-generator 2150 may be unsufficient for driving the speed sensor 2120. At this point, the capacitor 2220 may supply power to the speed sensor 2120 through the battery 2110, i.e., the capacitor 2220 may wake-up the speed sensor 2120. Accordingly, even when the output current of the self-generator 2150 is low, the speed sensor 2120 may be operated while receiving the power stably.

According to one embodiment of the present invention, charging of the battery 2110 by the capacitor 2220 of the external power supply module 2200 may be performed using the first wireless power transceiver 2230 and the second wireless power transceiver 2140. For example, the first wireless power transceiver 2230 and the second wireless power transceiver 2140 are each formed of a coil such that power may be transmitted in a wireless manner by a magnetic induction method or a magnetic resonance method. In addition to a case in which the first wireless power transceiver 2230 charges the second wireless power transceiver 2140, it is also possible for the second wireless power transceiver 2140 to transmit power to the first wireless power transceiver 2230 as necessary.

According to one embodiment of the present invention, when the vehicle speed sensor device 1200 comprises all of the self-generator 2150, the capacitor 2220, and the battery 2110, the self-generator 2150 may be connected to each of the capacitor 2220 and the battery 2110. Accordingly, the vehicle speed sensor device 1200 may be configured to determine whether power generated by the self-generator 2150 is used for charging the capacitor 2220 or is used for charging the battery 2110 based on a predetermined criterion. In this case, the battery 2110 may comprise a configuration for transmitting information on a charging level of the battery 2110 to the self-generator 2150, and the self-generator 2150 may comprise a configuration for receiving the information on the charging level of the battery 2110 therefrom. For example, the self-generator 2150 may be configured to charge the battery 2110 using the generated power when the charging level of the battery 2110 is less than or equal to a predetermined level (e.g., a predetermined current value or voltage value), whereas the self-generator 2150 may be configured to charge the capacitor 2220 using the generated power when the charging level exceeds the predetermined level. In this case, the self-generator 2150 may be configured to primarily charge the battery 2110 since power consumption of the speed sensor 2120 is relatively large as described above, and then configured to charge the capacitor 2220 when the charging level of the battery 2110 exceeds the predetermined level so as to prepare for discharging of the battery 2110 or to store power for driving any other electronic components in the vehicle 1000 in a case that the capacitor 2220 also supplies power to other electronic components of the vehicle 1000.

The predetermined level may be differently designed in consideration of a relationship between components. According to one embodiment of the present invention, when the capacitor 2220 also supplies power to other electronic components of the vehicle 1000, the predetermined level may be designed to be low so that the capacitor 2220 stably supplies the power to the other electronic components, since power consumption of other electronic components in the vehicle 1000 may be large. Alternatively, when the power consumption of the speed sensor 2120 is large and thus consumption of the battery 2110 is expected to be relatively fast becoming, the predetermined level may be designed to be high to increase power supply stability to the speed sensor 2120.

The external power supply module 2200 may further comprise one or more energy harvesting parts 2240 as components for converting an ambient energy source into power and storing the power in the capacitor 2220. The one or more energy harvesting parts 2240 may utilize an ambient energy source to contribute to enhancement of power supply stability for the speed sensor 2120. Further, when the capacitor 2220 is configured to also supply power to other electronic components of the vehicle 1000, the energy harvesting parts 2240 may be used to reserve power for driving any other electronic components in the vehicle 1000.

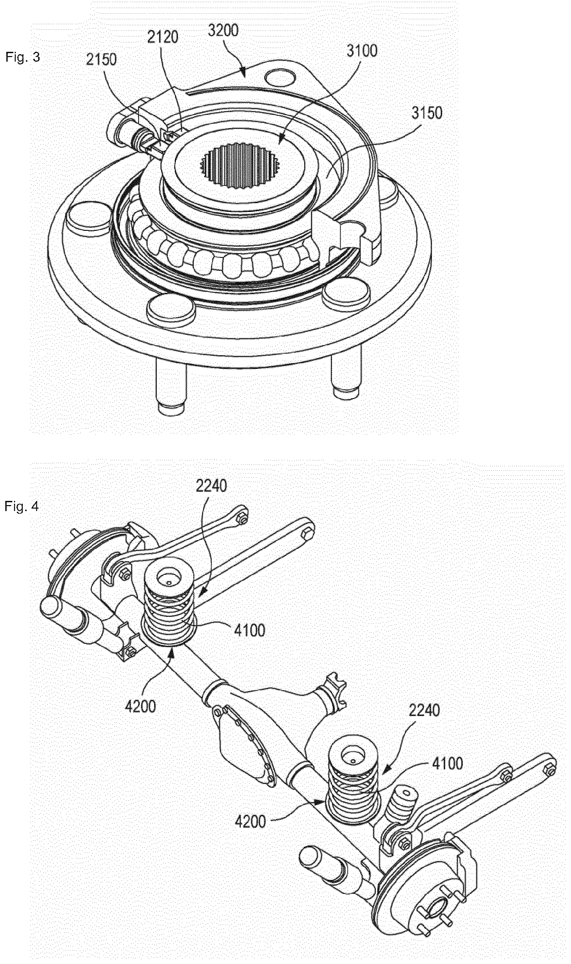

According to one embodiment of the present invention, the energy harvesting part 2240 may comprise a piezoelectric element installed at a suspension and configured to generate power from a displacement of the suspension. This energy harvesting part 2240 will be described in more detail below with reference to FIG. 4. Alternatively, the energy harvesting part 2240 may comprise a photovoltaic element installed on an outer surface of the vehicle 1000. The photovoltaic element may be installed on a part or entirety of the outer surface of the vehicle 1000 and may generate power from the sunlight to charge the capacitor 2220.

The wireless signal receiver 1320 is configured to receive a speed signal transmitted from the wireless signal transmitter 2130 of the sensing module 2100 through wireless communication. According to one embodiment of the present invention, the wireless signal receiver 1320 may use a low frequency (LF) signal, monitor a timing of signal transmission in real time, and receive a signal from each of the wheels without crosstalk using an identification (ID) assigned to each of the wheels. For example, a wireless frequency (RF) of a 2.4 GHz band, an 800 MHz band, a 400 MHz band, or the like may be used as a transmission frequency, and the transmission frequency may be differently applied according to a policy of each country. In order to avoid disturbance of a signal, which is transmitted from each of the wheels, due to an external ambient signal, a technique such as a physical unclonable function (PUF) may be used. The received speed signal is transmitted to the electronic controller 1310, and the electronic controller 1310 is configured to recognize whether slip of the vehicle 1000 occurs using the speed signal received from each of the wheels, and then control or adjust a braking force of the vehicle 1000 based on the recognition result.

FIG. 3 is a schematic diagram illustrating a position of each component of a vehicle speed sensor device according to one embodiment of the present invention in a vehicle wheel. According to one embodiment of the present invention, the wheel comprises a rotating member 3100 which is rotated during driving, and a fixed member 3200 which is fixed during driving. The speed sensor 2120 and the self-generator 2150 may be provided on the fixed member 3200 of the wheel. The rotating member 3100 comprises an encoder 3150 of forming a magnetic field required for power generation of the self-generator 2150. For example, the encoder 3150 may comprise a magnetized rubber magnet in which N and S poles are alternatively formed. When a wheel bearing is rotated, the encoder 3150 is rotated and the speed sensor 2120 and the self-generator 2150 are fixed. The speed sensor 2120 detects a speed from variation in magnetic field formed by the encoder 3150. According to one embodiment of the present invention, the self-generator 2150 comprises a coil, and a magnetic field formed by the encoder 3150 passes through a cross section of the coil. The variation in magnetic field formed by the encoder 3150 generates a potential difference proportional to a differential value with respect to time of a magnetic flux passing through the cross section of the coil at both ends of the coil due to electromagnetic induction. Alternatively, a tone wheel may be used instead of the encoder 3150.

FIG. 4 is a schematic diagram of a suspension comprising the energy harvesting part 2240 with a piezoelectric element 4200 according to one embodiment of the present invention. According to one embodiment of the present invention, the energy harvesting part 2240 comprises the piezoelectric element 4200. A spring 4100 is provided on the suspension so as to prevent impact from a road surface from being transmitted to the vehicle body. The spring 4100 repeats contraction and stretching and prevents the impact generated from the road surface from being directly transmitted to the vehicle body. The piezoelectric element 4200 is located at one or more of upper and lower portions of the spring 4100 to receive a displacement of the suspension, i.e., a mechanical pressure due to a load and a repulsive force which are generated by elastic deformation of the spring 4100. The potential difference is generated as polarizability of molecules constituting the piezoelectric element 4200 is varied due to the mechanical pressure. The piezoelectric element 4200 may be connected to the capacitor 2220 to charge the capacitor 2220 using the generated power.

Although not shown in FIG. 4, a design of the energy harvesting part may be diversified in addition to the configuration shown in FIG. 4. In any case, a displacement of an elastic body may occur as long as the suspension acts to alleviate transmission of the impact from the road surface using an elastic force acting due to the displacement of the elastic body. The piezoelectric element is coupled to the elastic body such that a mechanical force is also applied to the piezoelectric element, and the piezoelectric element may be configured to self-generate power based on such a mechanical force.

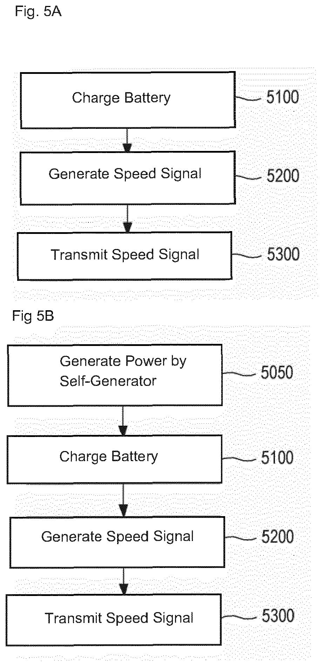

FIG. 5A is a flowchart illustrating an operating method of the vehicle speed sensor device 1200 not covered by the present invention. In the step 5100, the battery 2110 of the vehicle speed sensor device 1200 is charged. The battery 2110 may be a rechargeable battery, e.g., a lithium ion battery. Optionally, the step 5100 may comprise a step of supplying power to the battery 2110 through the external power supply module 2200. In the step 5200, a speed signal including rotational speed data is generated. A rotational speed of the wheel bearing is measured by the speed sensor 2120 receiving power supplied from the battery 2110, and then the speed signal may be generated based on the measured rotational speed of the wheel bearing. For example, the speed sensor 2120 may comprise a Hall IC having a Hall element. In the step 5300, the generated speed signal is transmitted to the electronic controller 1310 by the wireless signal transmitter 2130 through wireless communication.

A transmission period for transmitting the speed signal to the electronic controller 1310 through wireless communication may be differently designed as necessary. For example, the transmission period of the speed signal may be designed to be 50 µs or less. Further, since a stable supply of power to the speed sensor 2120 and stable transmission of the speed signal are important requirements relating to safety of the vehicle 1000 or a user, the step 5100 may be employed for stably supplying the power to the speed sensor 2120.

FIG. 5B is a flowchart illustrating the operating method of the vehicle speed sensor device 1200 not covered by the present invention. The operating method of the vehicle speed sensor device 1200 not covered by present invention further comprises the step 5050 in the operating method of the vehicle speed sensor device 1200 described with reference to FIG. 5A. In the step 5050, the power is generated by the self-generator 2150. The self-generator 2150 is included in the sensing module 2100 and generates power due to the rotation of the wheel bearing. A coupling relationship of the self-generator 2150 in the wheel is the same as that described above with reference to FIG. 3. Descriptions on the steps 5100, 5200, and 5300 are the same as those described with reference to FIG. 5A, and thus duplicate descriptions thereof will be omitted.

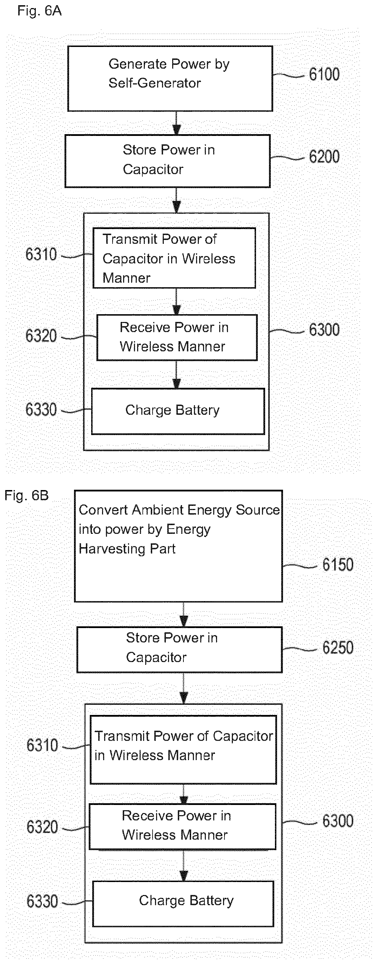

FIG. 6A is a flowchart illustrating an operating method of the vehicle speed sensor device 1200 not covered by the present invention. In the step 6100, power is generated by the self-generator 2150. In the step 6200, the power generated by the self-generator 2150 is stored in the capacitor 2220 included in the external power supply module 2200. The self-generator 2150 may be wired connected to the capacitor 2220. For example, the capacitor 2220 may be installed on each of the wheels and may be connected to the self-generator 2150 of a corresponding wheel. Alternatively, the number of capacitors 2220 provided in the vehicle 1000 may be less than the number of wheels, and one or more capacitors 2220 may be configured to be connected to a plurality of self-generators 2150. In one embodiment of the present invention, the capacitor 2220 may be configured to supply power not only to the vehicle speed sensor device 1200 according to the present invention but also to other electronic components of the vehicle 1000.

In the step 6300, the battery 2110 is charged using the power stored in the capacitor 2220. According to one embodiment of the present invention, when an output current of the self-generator 2150 is less than or equal to a predetermined value, the battery 2110 may be charged. In this case, even when the output current of the self-generator 2150 is low, the battery 2110 may be charged using the power stored in the capacitor 2220 so that the capacitor 2220 acts to "wake-up" the speed sensor 2120. Consequently, the speed sensor 2120 may stably receive the power.

Specifically, the step 6300 comprises the step 6310, the step 6320, and the step 6330. In the step 6310, the first wireless power transceiver 2230 included in the external power supply module 2200 transmits the power stored in the capacitor 2220 in a wireless manner. In the step 6320, the second wireless power transceiver 2140 receives the power transmitted in the step 6310. In the step 6330, the second wireless power transceiver 2140 charges the battery 2110 using the power received in the step 6320. For example, the wireless power transmission and reception in the steps 6310 and 6320 may be performed through a magnetic induction method or a magnetic resonance method.

FIG. 6B is a flowchart illustrating the operating method of the vehicle speed sensor device 1200 not covered by the present invention. In the step 6150, the energy harvesting part 2240 converts an ambient energy source into power. The energy harvesting part 2240 is a configuration included in the external power supply module 2200. The power converted by the energy harvesting part 2240 in the step 6150 is stored in the capacitor 2220 in the step 6250. The power converted by the energy harvesting part 2240 is stored in the capacitor 2220 so that the capacitor 2220 may contribute to enhancement of power supply stability to the speed sensor 2120. When the capacitor 2220 also supplies the power to other electronic components of the vehicle 1000, the capacitor 2220 may be used to reserve power for driving any other electronic component in the vehicle 1000. Descriptions of the step 6300 and the steps 6310, 6320, and 6330 included in the step 6300 are the same as those described with reference to FIG. 6A, and thus duplicate descriptions thereof will be omitted.

In one embodiment of the present invention, the step 6150 may comprise a step of generating power from a mechanical pressure according to the variation in displacement of the suspension by the piezoelectric element 4200 installed at the suspension. In the step 6150, a mechanical force is applied to the piezoelectric element 4200 from the mechanical pressure according to the variation in displacement of the suspension, and polarizability of molecules constituting the piezoelectric element 4200 is varied due to the mechanical force such that a potential difference occurs. Alternatively, the step 6150 may comprise a step of generating power from the sunlight through a photovoltaic element installed on the outer surface of the vehicle 1000.

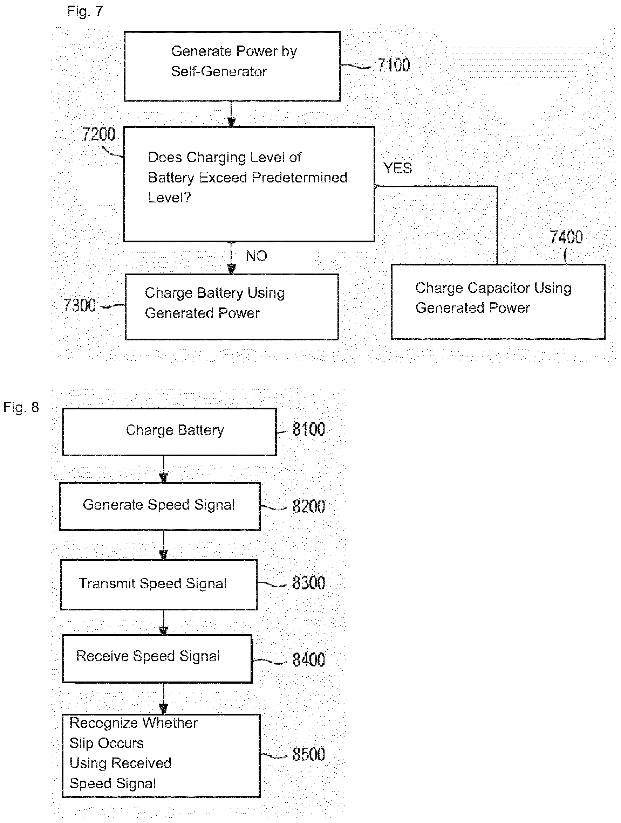

FIG. 7 is a flowchart illustrating a charging operation performed by the self-generator 2150 according to one embodiment of the present invention. In the operating method of the vehicle speed sensor device 1200 comprising all of the self-generator 2150, the capacitor 2220, and the battery 2110, a flowchart of an exemplary method of determining whether to use the power generated by the self-generator 2150 to charge the capacitor 2220 or the battery 2110 is illustrated in FIG. 7. In the step 7100, power is generated by the self-generator 2150. Then, in the step 7200, it is determined whether a charging level of the battery 2110 exceeds a predetermined level. When the charging level of the battery 2110 is less than or equal to the predetermined level, the battery 2110 is charged using the generated power in the step 7300. When the charging level of the battery 2110 exceeds the predetermined level, the capacitor 2220 is charged using the generated power in the step 7400. As described with reference to FIG. 2, such a determination method is used such that potential degradation in charging level of the battery 2110 may be prepared or power for driving any other electronic components in the vehicle 1000 may be reserved. Further, the predetermined level may be differently designed as necessary, and the example of the predetermined level is the same as that described with reference to FIG. 2, and thus a duplicate description thereof will be omitted.

FIG. 8 is a flowchart illustrating an operating method of the ABS apparatus 1100 not covered by the present invention. Descriptions of the steps 8100, 8200, and 8300 are the same as those of the steps 5100, 5200, and 5300 described with reference to FIG. 5A, and thus duplicate descriptions thereof will be omitted. A speed signal transmitted in the step 8300 is received by the wireless signal receiver 1320 in the step 8400. In the step 8500, the electronic controller 1310 recognizes whether slip of the vehicle 1000 occurs using the received speed signal.

Although the above-described methods have been described with reference to the specific embodiments, the above-described methods may also be implemented as a computer-readable code in a computer-readable recording medium. The computer-readable recording medium includes all kinds of recording devices in which data readable by a computer system is stored. Examples of the computer-readable recording medium may comprise a read only memory (ROM), a random access memory (RAM), a compact disc ROM (CD-ROM), a magnetic tape, a floppy disk, an optical data storage device, and the like. The computer-readable recording medium may also be distributed in a computer system connected via a network so that a computer-readable code may be stored and executed in a distributed manner. Further, functional programs, codes, and code segments for implementing the exemplary embodiments may be easily deduced by programmers skilled in the art to which the present invention pertains.

Although the present invention has been described herein in conjunction with some exemplary embodiments, it should be noted that various modifications are possible within the scope of the appended claims.

## Claims

1. A vehicle speed sensor device, comprising:
a rechargeable battery (2110);
a speed sensor (2120) configured to receive power from the battery (2110) and measure a rotational speed of a wheel bearing to generate a speed signal;
a wireless signal transmitter (2130) configured to transmit the speed signal to an electronic controller (1310) through wireless communication;
a self-generator (2150) configured to be able to generate power from rotation of the wheel bearing and charge the battery (2110) using the generated power; and
an external power supply module (2200) configured to supply power to the battery (2110);
wherein the external power supply module (2200) comprises a capacitor (2220) capable of storing the power generated by the self-generator (2150); and the capacitor (2220) is configured to charge the battery (2110) when an output current of the self-generator (2150) is less than or equal to a predetermined value, **characterized in that**:
the external power supply module (2200) further comprises a first wireless power transceiver (2230) connected to the capacitor (2220) and configured to transmit the power of the capacitor (2220) in a wireless manner; and
the vehicle speed sensor device (1200) further comprises a second wireless power transceiver (2140) configured to receive the power from the first wireless power transceiver (2230) provided in the external power supply module (2200) in a wireless manner and charge the battery (2110) using the received power.

2. The vehicle speed sensor device according to Claim 1, wherein a transmission period of the speed signal is 50 µs or less.

3. The vehicle speed sensor device according to Claim 1, wherein the self-generator (2150) is configured to charge the battery (2110) using the generated power when a charging level of the battery (2110) is less than or equal to a predetermined level and charge the capacitor (2220) using the generated power when the charging level of the battery (2110) exceeds the predetermined level.

4. The vehicle speed sensor device according to Claim 1, wherein the external power supply module (2200) comprises one or more energy harvesting parts (2240) configured to convert an ambient energy source into power and store the converted power in the capacitor (2220).

5. The vehicle speed sensor device according to Claim 4, wherein the energy harvesting part (2240) comprises a piezoelectric element (4200) installed at a suspension and configured to generate power from a displacement of the suspension.

6. The vehicle speed sensor device according to Claim 4, wherein the energy harvesting part (2240) comprises a photovoltaic element installed on an outer surface of the vehicle (1000) and configured to generate power from sunlight.

7. An anti-lock brake system (ABS) apparatus having the vehicle speed sensor device according to any one of Claims 1 to 6, the ABS apparatus comprising:
the electronic controller (1310),
wherein the electronic controller (1310) recognizes whether slip of a vehicle (1000) occurs using the speed signal transmitted from the wireless signal transmitter of the vehicle speed sensor device (1200) through wireless communication and controls a braking force of the vehicle based on whether the slip occurs.

## Patentansprüche

1. Fahrzeuggeschwindigkeitssensorvorrichtung, umfassend:
eine wiederaufladbare Batterie (2110);
einen Geschwindigkeitssensor (2120), der so konfiguriert ist, dass er Strom von der Batterie (2110) empfängt und eine Drehzahl eines Radlagers misst, um ein Geschwindigkeitssignal zu erzeugen;
einen drahtlosen Signalgeber (2130), der so konfiguriert ist, dass er das Geschwindigkeitssignal über drahtlose Kommunikation an eine elektronische Steuerung (1310) sendet;
einen Eigengenerator (2150), der so konfiguriert ist, dass er in der Lage ist, Strom aus einer Drehung des Radlagers zu erzeugen und die Batterie (2110) unter Verwendung des erzeugten Stroms zu laden; und
ein externes Stromversorgungsmodul (2200), das so konfiguriert ist, dass es der Batterie (2110) Strom zuführt;
wobei das externe Stromversorgungsmodul (2200) einen Kondensator (2220) umfasst, der in der Lage ist, den durch den Eigengenerator erzeugten Strom zu speichern; und der Kondensator (2220) so konfiguriert ist, dass er die Batterie lädt, wenn ein Ausgangsstrom des Eigengenerators (2150) kleiner oder gleich einem vorbestimmten Wert ist, **dadurch gekennzeichnet, dass**
das externe Stromversorgungsmodul (2200) ferner einen ersten drahtlosen Stromtransceiver (2230) umfasst, der mit dem Kondensator (2220) verbunden ist und so konfiguriert ist, dass er den Strom des Kondensators (2220) auf eine drahtlose Weise überträgt; und
die Fahrzeuggeschwindigkeitssensorvorrichtung (1200) ferner einen zweiten drahtlosen Stromtransceiver (2140) umfasst, der so konfiguriert ist, dass er den Strom von dem ersten drahtlosen Stromtransceiver (2230), der in dem externen Stromversorgungsmodul (2200) vorgesehen ist, auf eine drahtlose Weise empfängt und die Batterie (2110) unter Verwendung des empfangenen Stroms lädt.

2. Fahrzeuggeschwindigkeitssensorvorrichtung gemäß Anspruch 1, wobei eine Übertragungsperiode des Geschwindigkeitssignals 50 µs oder weniger beträgt.

3. Fahrzeuggeschwindigkeitssensorvorrichtung gemäß Anspruch 1, wobei der Eigengenerator (2150) so konfiguriert ist, dass er die Batterie (2110) unter Verwendung des erzeugten Stroms lädt, wenn ein Ladepegel der Batterie (2110) kleiner oder gleich einem vorbestimmten Pegel ist, und den Kondensator (2220) unter Verwendung des erzeugten Stroms lädt, wenn der Ladepegel der Batterie (2110) den vorbestimmten Pegel überschreitet.

4. Fahrzeuggeschwindigkeitssensorvorrichtung gemäß Anspruch 1, wobei das externe Stromversorgungsmodul (2200) ein oder mehrere Energiegewinnungsteile (2240) umfasst, die so konfiguriert sind, dass sie eine Umgebungsenergiequelle in Strom umwandeln und den umgewandelten Strom in dem Kondensator (2220) speichern.

5. Fahrzeuggeschwindigkeitssensorvorrichtung gemäß Anspruch 4, wobei das Energiegewinnungsteil (2240) ein piezoelektrisches Element (4200) umfasst, das an einer Aufhängung installiert ist und so konfiguriert ist, dass es Strom aus einer Verschiebung der Aufhängung erzeugt.

6. Fahrzeuggeschwindigkeitssensorvorrichtung gemäß Anspruch 4, wobei das Energiegewinnungsteil (2240) ein Photovoltaikelement umfasst, das an einer Außenfläche des Fahrzeugs (1000) installiert ist und so konfiguriert ist, dass es Strom aus Sonnenlicht erzeugt.

7. Antiblockiersystem-(ABS)-Vorrichtung aufweisend die Fahrzeuggeschwindigkeitssensorvorrichtung gemäß einem der Ansprüche 1 bis 6, wobei die ABS-Vorrichtung Folgendes umfasst:
- die elektronische Steuerung (1310),
wobei die elektronische Steuerung (1310) erkennt, ob ein Schlupf eines Fahrzeugs (1000) auftritt, unter Verwendung des Geschwindigkeitssignals, das von dem drahtlosen Signalgeber der Fahrzeuggeschwindigkeitssensorvorrichtung (1200) durch drahtlose Kommunikation übertragen wird, und eine Bremskraft des Fahrzeugs basierend darauf steuert, ob der Schlupf auftritt.

## Revendications

1. Dispositif de capteur de vitesse de véhicule, comprenant :
une batterie rechargeable (2110) ;
un capteur de vitesse (2120) configuré pour recevoir du courant électrique de la batterie (2110) et mesurer une vitesse de rotation d'un palier de roue pour générer un signal de vitesse ;
un transmetteur de signal sans fil (2130) configuré pour transmettre le signal de vitesse à une commande électronique (1310) par communication sans fil ;
un auto-générateur (2150) configuré pour être en mesure de générer du courant électrique à partir de la rotation du palier de roue et de charger la batterie (2110) en utilisant le courant électrique généré ; et
un module d'alimentation en courant électrique externe (2200) configuré pour fournir du courant électrique à la batterie (2110) ;
dans lequel le module d'alimentation en courant électrique externe (2200) comprend un condensateur (2220) capable de stocker le courant électrique généré par l'auto-générateur (2150) ; et le condensateur (2220) est configuré pour charger la batterie (2110) lorsqu'un courant électrique émis de l'auto-générateur (2150) est inférieur ou égal à une valeur prédéterminée, **caractérisé en ce que** :
le module d'alimentation en courant électrique externe (2200) comprend en outre un premier émetteur-récepteur de courant électrique sans fil (2230) relié au condensateur (2220) et configuré pour transmettre le courant électrique du condensateur (2220) de manière sans fil ; et
le dispositif de capteur de vitesse de véhicule (1200) comprend en outre un deuxième émetteur-récepteur de courant électrique sans fil (2140) configuré pour recevoir le courant électrique du premier émetteur-récepteur de courant électrique sans fil (2230) prévu dans le module d'alimentation en courant électrique externe (2200) de manière sans fil et charger la batterie (2110) en utilisant le courant électrique reçu.

2. Dispositif de capteur de vitesse de véhicule selon la revendication 1, dans lequel une période de transmission du signal de vitesse est de 50 µs ou moins.

3. Dispositif de capteur de vitesse de véhicule selon la revendication 1, dans lequel l'auto-générateur (2150) est configuré pour charger la batterie (2110) en utilisant le courant électrique généré lorsqu'un niveau de charge de la batterie (2110) est inférieur ou égal à un niveau prédéterminé et charger le condensateur (2220) en utilisant le courant électrique généré lorsque le niveau de charge de la batterie (2110) dépasse le niveau prédéterminé.

4. Dispositif de capteur de vitesse de véhicule selon la revendication 1, dans lequel le module d'alimentation en courant électrique externe (2200) comprend une ou plusieurs parties de récupération d'énergie (2240) configurée(s) pour convertir une source d'énergie ambiante en courant électrique et stocker le courant électrique converti dans le condensateur (2220).

5. Dispositif de capteur de vitesse de véhicule selon la revendication 4, dans lequel la partie de récupération d'énergie (2240) comprend un élément piézoélectrique (4200) monté sur une suspension et configuré pour générer du courant électrique à partir d'un déplacement de la suspension.

6. Dispositif de capteur de vitesse de véhicule selon la revendication 4, dans lequel la partie de récupération d'énergie (2240) comprend un élément photovoltaïque monté sur une surface extérieure du véhicule (1000) et configuré pour générer du courant électrique à partir de la lumière du soleil.

7. Appareil à système de freinage anti-blocage (ABS) ayant le dispositif de capteur de vitesse de véhicule selon l'une quelconque des revendications 1 à 6, l'appareil à ABS comprenant :
la commande électronique (1310),
dans lequel la commande électronique (1310) reconnaît si un glissement d'un véhicule (1000) se produit en utilisant le signal de vitesse transmis par le transmetteur de signal sans fil du dispositif de capteur de vitesse de véhicule (1200) par communication sans fil et commande une force de freinage du véhicule en se basant sur l'occurrence ou non du glissement.
